# FASCICULE DE BREVET EUROPEEN

(11) **EP 3 938 326 B1**
(45) Date de publication et mention de la délivrance du brevet: **17.12.2025**
(21) Numéro de dépôt: 20709192.7
(22) Date de dépôt: 05.03.2020
(51) Int. Cl.: C03B 37/027

(54) **PROCÉDÉ DE FABRICATION D'UNE FIBRE OPTIQUE CREUSE MICROSTRUCTURÉE**
VERFAHREN ZUR HERSTELLUNG EINER MIKROSTRUKTUIERTEN HOHLKERNGLASFASER
METHOD FOR MANUFACTURING A HOLLOW-CORE MICROSTRUCTURED OPTICAL FIBRE

(30) Priorité: 15.03.2019 FR 1902655
(43) Date de publication de la demande: 19.01.2022
(73) Titulaire: Université de Limoges, 87000 Limoges (FR); Centre national de la recherche scientifique, 75016 Paris (FR)
(72) Inventeur: BENABID, Fetah, 87410 LE PALAIS-SUR-VIENNE (FR); GEROME, Frédéric, 87100 LIMOGES (FR); ARMANI, Foued, 87000 LIMOGES (FR); DELAHAYE, Frédéric, 87100 LIMOGES (FR); DEBORD, Benoît, 87000 LIMOGES (FR)
(74) Mandataire: IPAZ
(86) Numéro de dépôt international: PCT/EP2020/055913
(87) Numéro de publication internationale: WO 2020/187594

(56) Documents cités:
- WO-A2-2005/012197
- US-A1- 2009 245 729
- US-A1- 2010 303 429
- BRUNO BRESSON ET AL: "Anisotropic super-attenuation of capillary waves on driven glass interfaces", ARXIV.ORG, CORNELL UNIVERSITY LIBRARY, 201 OLIN LIBRARY CORNELL UNIVERSITY ITHACA, NY 14853, 6 June 2017 (2017-06-06), XP080769315

## Description

### Domaine technique

La présente invention concerne un procédé de fabrication d'une fibre optique.

### Etat de la technique antérieure

US 2009/245729 A1 décrit une fibre au cœur ultra petit.

US 2010/303429 A1 décrit une fibre optique microstructurée.

WO 2005/012197 A1 décrit des fibres optiques fabriquées à partir de préformes allongées.

L'article de Bruno Bresson et al. intitulé « Anisotropic super-attenuation of capillary waves on driven glass interfaces » décrit l'atténuation d'ondes capillaires à une interface de verre.

Aujourd'hui, la limite de la performance de transmission des fibres optiques est fixée par les pertes par diffusion.

La fibre optique à cœur creux a connu un progrès phénoménal depuis sa conception il y a presque 20 ans. Ce progrès se décline par les techniques de sa fabrication et sa performance de transmission ainsi que par les applications qui ont vu le jour suite à sa réalisation et qui couvrent des domaines divers et variés comme les télécommunications, l'optique nonlinéaire, les lasers, le micro-usinage, la physique des atomes froids ou la spectroscopie de haute résolution et les capteurs.

Dans ce contexte, l'état de l'art des pertes de transmission est autour de 2 à 10 dB/km pour les fibres creuses suivant le type de fibre et la gamme spectrale.

Le but de la présente invention est de proposer un procédé et un dispositif de fabrication de fibre optique creuse améliorant la performance de transmission desdites fibres et/ou ayant des pertes réduites relativement à l'état de l'art actuel.

### Exposé de l'invention

Cet objectif est atteint avec un procédé selon la revendication 1.

Les parois ont de préférence une épaisseur inférieure à 10µm, de préférence inférieure à 3 µm, de préférence inférieure à 10nm.

La préforme est de préférence insérée par une entrée du four. Les flux de gaz longeant les parois sont de préférence créés par :
- une création d'un flux de gaz dit de sortie se propageant de l'entrée vers la sortie du four, et
- une création d'un flux de gaz dit d'entrée se propageant de la sortie vers l'entrée du four.

Le flux de sortie et le flux d'entrée sont de préférence créés par des moyens de surpression et dépression créant dans la préforme du côté de l'entrée une différence de pression entre le flux de sortie et le flux d'entrée, de préférence d'au moins 100 Pa, de préférence d'au moins 1 kPa.

Le flux de gaz de sortie et/ou le flux de gaz d'entrée est de préférence créé dans différentes zones distinctes de la zone de travail.

Les flux de gaz sont de préférence créés par des moyens situés du côté d'une entrée du four par laquelle est insérée la préforme.

Le gaz des flux de gaz comprend de préférence de l'air et/ou un gaz neutre.

La préforme est de préférence une préforme en verre.

La zone de travail est de préférence à une température supérieure à 1000°C, de préférence supérieure à 1500 °C.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
**[****Fig. 1****]** la figure 1 est une vue schématique de coupe de profil d'un premier mode de réalisation de dispositif 101 pour le procédé selon l'invention, dans lequel passe une préforme 1,
**[****Fig. 2****]** la figure 2 est un agrandissement d'une partie d'une paroi 7 de la préforme 1,
**[****Fig. 3****]** la figure 3 est une vue schématique en perspective de la préforme 1 au niveau de la zone de travail 4,
**[****Fig. 4****]** la figure 4 est un agrandissement de la partie 10 de la figure 3 et est une vue schématique de coupe de profil d'une paroi 7 de la préforme 1 au niveau de la zone de travail 4 avec (figure 4a) et sans (figure 4b) mise en œuvre d'un procédé selon l'invention,
**[****Fig. 5****]** la figure 5 est une vue de coupe de dessus de la préforme 1 au niveau de la zone de travail 4 avec (figure 5b) et sans (figure 5a) mise en œuvre d'une autre variante de procédé selon l'invention, et
**[****Fig. 6****]** la figure 6 est une vue de coupe de dessus de la préforme 1 au niveau de la zone de travail 4 dans une autre variante de procédé selon l'invention.

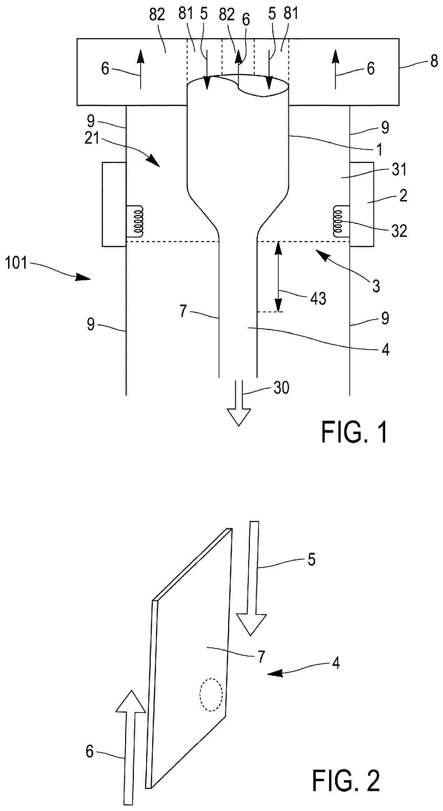

On va tout d'abord décrire, en référence aux figures 1 à 6, un premier mode de réalisation de dispositif 101 de fabrication d'une fibre optique pour le procédé selon l'invention.

Le dispositif 101 comprend un four 2. Le four 2 est par exemple une fournaise pour étirage de fibre de chez Nextrom.

Le four 2 comprend une entrée 21 agencée pour insérer une préforme 1 (typiquement une canne de verre) dans le four 2. Le dispositif 101 comprend en outre du côté de l'entrée 21 des moyens de maintien (non illustrés) agencés pour maintenir une première extrémité de la préforme 1 du côté de l'entrée 21. Ces moyens de maintien consistent par exemple en un mandrin posé sur une platine de translation.

Le dispositif 101 comprend des moyens pour étirer la préforme 1 par une sortie 3 du four, le long d'une direction d'étirement 30. Ces moyens, non illustrés, sont disposés du côté de la sortie 3 du four 2. Ces moyens comprennent typiquement deux courroies en vis-à-vis disposées du côté de la sortie 3 du four 2, et où la fibre étirée est placée entres les deux courroies pour étirage avec une vitesse ajustable.

L'entrée 21 et la sortie 3 sont situées à deux extrémités opposées du four 2 le long de la direction 30.

Le dispositif 101 comprend des moyens agencés pour soumettre, au moins après la sortie 3 du four 2, les deux faces opposées de parois 7 composant une structure d'une zone de travail 4 de la préforme 1 étirée à des flux de gaz 5, 6 longeant ces parois 7 mais de sens contraires de manière à soumettre ces parois 7 à un cisaillement de flux de gaz contre propageant de part et d'autre de ces parois 7.

Le flux 5 est un flux laminaire le long des parois 7 composant la structure de la zone de travail 4.

Le flux 5 est un flux laminaire dans l'intégralité de la préforme 1.

Le flux 6 est un flux laminaire le long des parois 7 composant la structure de la zone de travail 4.

Le flux 6 est un flux laminaire dans l'intégralité de la préforme 1.

Pour chaque paroi 7, de chaque côté de la paroi 7 dans laquelle circule le flux respectivement 5 ou 6, le ratio entre :
- l'aire (le long d'une coupe transversale perpendiculaire au flux 5 et 6), à l'entrée 21 du four, d'une structure de la préforme 1 à l'intérieure de laquelle circule le flux respectivement 5 ou 6, et
- l'aire (le long d'une coupe transversale perpendiculaire au flux 5 et 6), dans la zone de travail 4 (i.e. du côté de la sortie 3 du four 2), de cette même structure de la préforme 1 à l'intérieure de laquelle circule le flux respectivement 5 ou 6,
est inférieur à 900.

Autrement dit, dans le cas particulier d'une structure ayant une section transversale circulaire, pour chaque paroi 7, de chaque côté de la paroi 7 dans laquelle circule le flux respectivement 5 ou 6, le ratio entre :
- le diamètre (le long d'une coupe transversale perpendiculaire au flux 5 et 6), à l'entrée 21, d'une structure de la préforme 1 à l'intérieure de laquelle circule le flux respectivement 5 ou 6, et
- le diamètre (le long d'une coupe transversale perpendiculaire au flux 5 et 6), dans la zone de travail 4, de cette même structure de la préforme 1 à l'intérieure de laquelle circule le flux respectivement 5 ou 6,
est inférieur à 30.

Les moyens agencés pour soumettre la préforme 1 étirée à des flux de gaz 5, 6 de sens contraires comprennent :
- des moyens 81 pour créer un flux de gaz dit de sortie 5 se propageant de l'entrée 21 vers la sortie 3 du four 2, et
- des moyens 82 pour créer un flux de gaz dit d'entrée 6 se propageant de la sortie 3 vers l'entrée 21 du four 2.

Les moyens 81 pour créer le flux de sortie 5 et les moyens 82 pour créer le flux d'entrée 6 comprenant des moyens 8 de surpression et dépression agencés pour créer dans la préforme 1 du côté de l'entrée 21 une différence de pression entre le flux de sortie 5 et le flux d'entrée 6, de préférence d'au moins 100 Pa, de préférence d'au moins 1 kPa, typiquement d'au moins 10 kPa.

Ces moyens 8 comprennent typiquement une pièce mécanique avec au moins deux cavités. Chaque cavité est rattachée de façon étanche par des canalisations à des régulateurs de pression, qui sont à leur tour raccordés à une entré de gaz ou à une pompe à vide.

Les moyens 81 pour créer le flux de sortie 5 et les moyens 82 pour créer le flux d'entrée 6 sont agencés pour créer le flux de gaz de sortie 5 et/ou le flux de gaz d'entrée 6 dans différentes zones distinctes de la zone de travail 4.

Les moyens agencés pour soumettre la préforme 1 étirée à des flux de gaz 5, 6 de sens contraires sont situés du côté de l'entrée 21 du four 2.

Le gaz des flux de gaz 5, 6 comprend ou consiste typiquement de l'air et/ou au moins un gaz neutre parmi l'hélium, le néon, l'argon, le krypton, le xénon et le radon et/ou un mélange de ceux-ci.

Le dispositif 101 comprend une ou plusieurs barrières 9 (comprenant par exemple un tube en métal permettant d'enfermer et/ou guider un flux de gaz 5 ou 6):
- agencée(s) pour entourer la préforme 1 à l'entrée 21 du four 2 et reliant les moyens 8 à l'entrée 21, et agencée(s) pour confiner au moins une partie du flux 5 et/ou 6 sur le pourtour extérieur de la préforme 1 entre les moyens 8 et l'entrée 21, et/ou
- agencée(s) pour entourer la préforme 1 à la sortie du four 2 et s'étendant au moins à partir de la sortie 3 et jusqu'à la zone 4 inclue, et agencée pour confiner au moins une partie du flux 5 et/ou 6 sur le pourtour extérieur de la préforme 1 à partir de la sortie 3 et jusqu'à la zone 4 inclue.

La zone de travail 4 est située en dehors du four 2.

La zone de travail 4 est située du côté de la sortie 3 du four 2.

Le four 2 comprend :
- une enceinte 31 traversée par la préforme, et
- une source de chaleur 32 disposée dans l'enceinte 31 et agencée pour élever la température à l'intérieur de l'enceinte 31.

La zone de travail 4 est située à une distance 43, mesurée le long de la direction 30, typiquement inférieure à 10 cm de la source de chaleur 32.

Le four 2 est agencé pour que la zone de travail 4 soit à une température supérieure à une température de ramollissement ou de transition vitreuse du matériau composant la préforme 1, de préférence supérieure à 1000°C, de préférence supérieure à 1500 °C.

La température de transition vitreuse est par exemple de :
- 150°C pour du Chalcogenide GeSbTe,
- 245°C pour du Chalcogenide AsGeSeTe,
- 235°C pour du Verre au fluorure ZBLAN,
- 280°C pour du Tellurium dioxide,
- 400°C pour du Fluoroaluminate,
- 1200°C pour du Quartz fondu.

On va maintenant décrire, en référence aux figures 1 à 6, un premier mode de réalisation de procédé selon l'invention mis en œuvre par le dispositif 101.

Dans ce mode de réalisation de procédé de fabrication d'une fibre optique :
- on insère la préforme 1 dans le four 2,
- on étire la préforme 1 par la sortie 3 du four 2, et
- la préforme 1 ainsi étirée comprenant la zone de travail 4, cette zone 4 comprenant une structure composée des parois 7, on soumet (après la sortie 3 du four 2) les deux faces opposées de ces parois 7 de la zone 4 aux flux de gaz 5, 6 longeant ces parois 7, ces flux 5, 6 étant de sens contraires de manière à soumettre ces parois 7 à un cisaillement de flux de gaz contre propageant de part et d'autre de ces parois 7.

La préforme 1 est une préforme en verre, par exemple en silice

La préforme 1 a une forme de tube creux, simple ou de préférence avec des structures internes.

La zone de travail 4 forme une fibre optique creuse.

La zone de travail 4 de la préforme 1 étirée forme de préférence une fibre optique de type micro-structurée, par exemple de type Kagome.

La zone de travail 4 de la préforme étirée 1 comprend uniquement des parois 7 dont l'épaisseur est inférieure à 10µm, de préférence inférieure à 3 µm, de préférence inférieure à 300nm.

La zone de travail 4 est située en dehors du four 2, du côté de la sortie 3.

La zone de travail 4 est à une température supérieure à une température de ramollissement ou de transition vitreuse du matériau composant la préforme 1, de préférence supérieure à 1000°C, de préférence supérieure à 1500 °C.

Alors que la préforme 1 est insérée par l'entrée 21 du four 2, les flux de gaz 5, 6 longeant les parois 7 sont créés par :
- une création du flux de gaz dit de sortie 5 se propageant de l'entrée 21 vers la sortie 3 du four 2, et
- une création du flux de gaz dit d'entrée 6 se propageant de la sortie 3 vers l'entrée 21 du four 2.

Les flux de gaz 5, 6 sont créés par les moyens 8 situés du côté de l'entrée 21 du four par laquelle est insérée la préforme 1.

Le flux de sortie 5 et le flux d'entrée 6 sont créés par les moyens 8 de surpression et dépression créant dans la préforme 1 du côté de l'entrée 21 une différence de pression entre le flux de sortie et le flux d'entrée, de préférence d'au moins 100 Pa, de préférence d'au moins 1 kPa, typiquement d'au moins 10 kPa.

Dans la préforme 1 du côté de l'entrée 21, la pression du flux 5 est typiquement égale à la pression atmosphérique plus 5 à 10 kPa et la pression du flux 6 est typiquement égale à la pression atmosphérique moins 5 à 10 kPa.

Pour une préforme 1 différente d'un tube simple mais ayant différentes structures internes permettant la fabrication d'une fibre optique micro-structurée, le flux de gaz de sortie 5 et/ou le flux de gaz d'entrée 6 est créé dans différentes zones distinctes de la zone de travail 4.

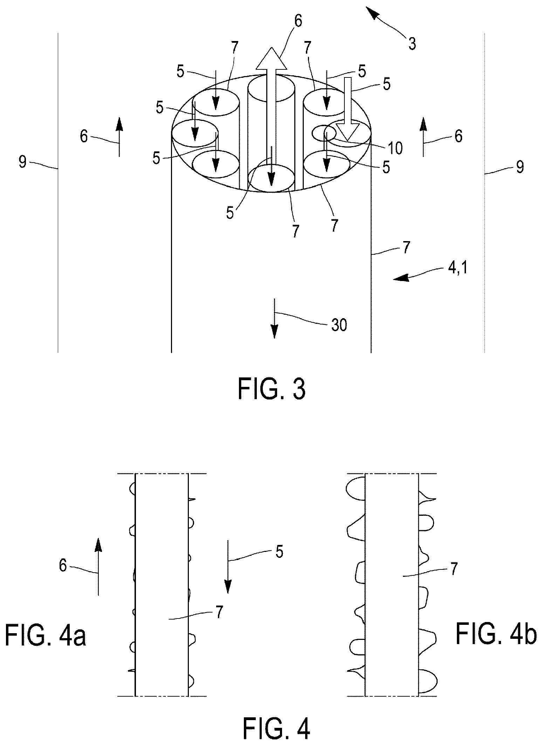

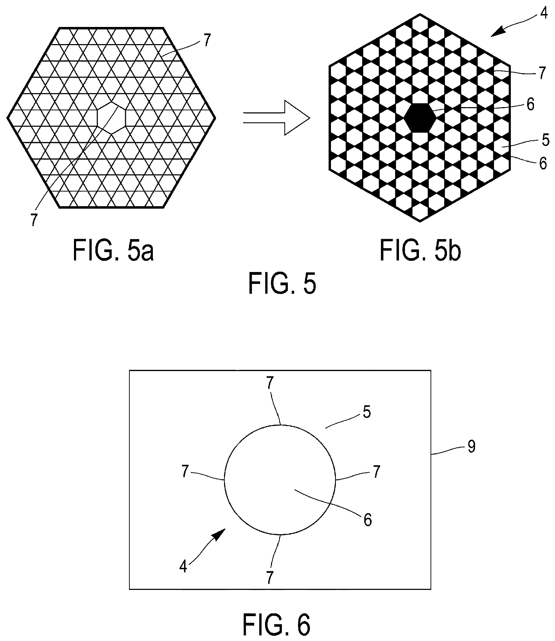

Selon la variante considérée, la zone de travail 4 de la préforme étirée 1 peut par exemple comprendre :
- en référence à la figure 3, les parois 7 qui forment :
   ∘ un cœur creux dans lequel circule le flux respectivement 6 ou 5
   ∘ des cylindres ou tubes creux entourant le cœur creux et dans chacun desquels circule le flux respectivement 5 ou 6
   ∘ une paroi entourant le cœur creux et les cylindres ou tubes, sur le pourtour extérieur de laquelle circule le flux respectivement 6 ou 5
- en référence à la figure 5, les parois 7 qui forment une structure alvéolaire comprenant des alvéoles (par exemple hexagonales) dans chacune desquelles circule le flux respectivement 5 ou 6, et des creux ou espace séparant ces alvéoles dans chacun desquels circule le flux respectivement 6 ou 5 (grisés sur la figure 5b par rapport à la figure 5a),
- en référence à la figure 6, les parois 7 (paroi gauche, paroi droite, paroi de devant, paroi de derrière de la préforme 1) sont regroupées sous la forme d'un simple tube ou cylindre creux à l'intérieur duquel circule le flux respectivement 6 ou 5 et à l'extérieur duquel circule le flux respectivement 5 ou 6.

L'invention permet la réduction de l'amplitude de la rugosité de surface d'une surface intercalée entre deux forces de stress de cisaillement ayant des sens opposés.

L'invention permet, pour les fibres micro-structurées à cœur creux, de limiter la rugosité de surface, due à un phénomène hydrodynamique lors de l'étirage de la fibre et qui induit des pertes par diffusion de lumière et donc une limite de la performance de transmission des fibres optiques.

Pendant la fabrication de la fibre optique, la préforme 1 est insérée dans le four 2 et chauffée à une température telle que le verre subit une transition de phase et devient viscoélastique. Ce verre « liquide » est ensuite étiré en fibre optique. Pendant cette phase liquide, le verre est le lieu d'une fluctuation de masse ou de densité qui peut être présentée comme une composition stochastique d'ondes phononiques. Lors de cet étirage le verre subit une deuxième transition de phase passant du liquide à la phase solide, et les fluctuations citées ci-dessus sont « gelées ». Dans le cas des fibres creuses (fibre optique guidant dans un cœur creux), les fluctuations gelées résultent d'ondes surfaciques, appelée ondes capillaires, et prennent la forme d'une rugosité de surface illustrée sur la figure 4.b en cas d'absence de mise en œuvre du procédé selon l'invention, i.e. sans les flux 5,6. Cette rugosité induit aussi une diffusion de lumière dont l'amplitude est proportionnelle au taux de recouvrement de la lumière dans le cœur avec le contour de verre et à l'amplitude de rugosité de surface. Aujourd'hui, cette diffusion est une limite de l'état de l'art des fibres creuses.

Au contraire, après mise en œuvre de ce procédé selon l'invention, on a comme illustré sur la figure 4.a une réduction de rugosité de surface par contrôle des ondes capillaires par un stress de cisaillement contre-propageant.

Des travaux ont montré que pour les fibres creuses guidant par Couplage-Inhibé, type Kagome ou tubulaire, les pertes peuvent être aussi bas que 10-² à 10-³ dB/km dans la gamme spectrale du Visible à l'UV si la rugosité de surface est fortement réduite.

L'invention adresse donc une problématique capitale pour la fibre optique à cœur creux.

Dans un exemple particulier :
- la préforme est en silice à cœur creux avec une gaine microstructurée de type Kagome et a, à l'entrée 21, un diamètre externe de 40 mm
- l'enceinte du four 2 est chauffée à 1900°C
- la zone de travail 4 est à une température d'environ 300 °C à 1000°C
- la préforme 1 est étirée, du côté de la sortie 3, à une vitesse de 15m/min
- le flux 5 est un flux d'argon et à une pression, dans la préforme 1 du côté de l'entrée 21, de 30 kPa au-dessus de la pression atmosphérique,
- le flux 6 de sortie est à une pression, dans la préforme 1 du côté de l'entrée 21, de 6 kPa en dessous de la pression atmosphérique.

La fibre optique obtenue a une excellente perte de transmission d'environ 1-2 dB/km à 600-800 nm.

L'invention permet d'obtenir une fibre creuse avec des pertes plus basses que l'état de l'art actuel et consolidera ses applications dans les secteurs comme :
1. Micro-usinage par laser : La fibre obtenue selon la présente invention permet un acheminement flexible et sécurisé de faisceau laser de haut flux.
2. Compression d'impulsion laser : La fibre obtenue selon la présente invention permet de comprimer des impulsions laser par une simple optimisation de la longueur de fibre et le choix du gaz à introduire dans le coeur de la fibre.
3. Chirurgie : La fibre obtenue selon la présente invention permet un acheminement flexible et sécurisé de faisceau laser pour des opérations endoscopiques ou de type Lasik.
4. Traitement de cellule : La fibre obtenue selon la présente invention permet un acheminement flexible et sécurisé de faisceau laser ultra-bref pour détruire de façon ciblée et sans dépôt de chaleur des cellules cancéreuses.
5. Laser à gaz : La fibre obtenue selon la présente invention et dont le coeur est rempli d'un gaz actif permet d'être utilisé comme un milieu de gain laser.
6. Etalon de fréquence : La fibre obtenue selon la présente invention et dont le coeur est rempli d'un gaz (e.g. acétylène , vapeur Rb ou Cs) permet d'être utilisée comme un étalon de fréquence.
7. Imagerie THZ : Le guide THZ obtenu selon la présente invention permet un acheminement flexible et sécurisé de radiation THZ, et de collecte de radiation THZ pour l'imagerie.
8. Guide d'onde pour le THZ et le micro-onde : Le guide obtenu selon la présente invention permet un guidage THZ et/ou micro-onde monomodal et à faibles pertes de transmission.
9. Telecomuunication « low latency » dans les « data centres ».

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé de fabrication d'une fibre optique, dans lequel :
- on insère une préforme (1) dans un four (2),
- on étire la préforme par une sortie (3) du four, et
- la préforme ainsi étirée comprenant une zone de travail (4)
la zone de travail formant une fibre optique creuse de type micro-structurée,
la zone de travail étant située en dehors du four, du côté de la sortie (3) du four,
la zone de travail étant à une température supérieure à une température de ramollissement ou de transition vitreuse du matériau composant la préforme, la zone de travail comprenant une structure composée de parois (7), de sorte que l'on soumet les deux faces opposées de ces parois à des flux de gaz laminaires (5, 6) longeant ces parois mais de sens contraires de manière à soumettre ces parois à un cisaillement de flux de gaz laminaires contre propageant de part et d'autre de ces parois.

2. Procédé selon la revendication 1, **caractérisé en ce que** les parois (7) ont une épaisseur inférieure à 10µm, de préférence inférieure à 3 µm, de préférence inférieure à 300nm.

3. Procédé selon l'une quelconque des revendications précédentes, **caractérisé en ce que** la préforme (1) est insérée par une entrée (21) du four (2), les flux de gaz (5, 6) longeant les parois (7) étant créés par :
- une création d'un flux de gaz dit de sortie (5) se propageant de l'entrée (21) vers la sortie (3) du four (2), et
- une création d'un flux de gaz dit d'entrée (6) se propageant de la sortie (3) vers l'entrée (21) du four (2).

4. Procédé selon la revendication 3, **caractérisé en ce que** le flux de sortie et le flux d'entrée sont créés par des moyens (8) de surpression et dépression créant dans la préforme (1) du côté de l'entrée 21 une différence de pression entre le flux de sortie et le flux d'entrée, de préférence d'au moins 100 Pa, de préférence d'au moins 1 kPa.

5. Procédé selon la revendication 3 ou 4, **caractérisé en ce que** le flux de gaz de sortie et/ou le flux de gaz d'entrée est créé dans différentes zones distinctes de la zone de travail.

6. Procédé selon l'une quelconque des revendications précédentes, **caractérisé en ce que** les flux de gaz sont créés par des moyens situés du côté d'une entrée (21) du four par laquelle est insérée la préforme.

7. Procédé selon l'une quelconque des revendications précédentes, **caractérisé en ce que** le gaz des flux de gaz comprend de l'air et/ou un gaz neutre.

8. Procédé selon l'une quelconque des revendications précédentes, **caractérisé en ce que** la préforme est une préforme en verre.

9. Procédé selon l'une quelconque des revendications précédentes, **caractérisé en ce que** la zone de travail est à une température supérieure à 1000°C, de préférence supérieure à 1500 °C.

## Patentansprüche

1. Verfahren zur Herstellung einer optischen Faser, wobei
- ein Vorformling (1) in einen Ofen (2) eingebracht wird,
- der Vorformling durch einen Auslass (3) aus dem Ofen gezogen wird und
- der so gezogene Vorformling einen Arbeitsbereich (4) umfasst, wobei der Arbeitsbereich eine optische Hohlfaser mikrostrukturierter Art bildet und sich außerhalb des Ofens, in der Nähe des Auslasses (3) des Ofens, befindet,
der Arbeitsbereich sich auf einer Temperatur befindet, die höher als die Erweichungs- oder Glasübergangstemperatur des Materials ist, aus dem der Vorformling besteht, der Arbeitsbereich eine Struktur umfasst, die aus Wänden (7) besteht, sodass die beiden gegenüberliegenden Seitenflächen dieser Wände laminaren Gasströmen (5, 6) entlang dieser Wände, jedoch in entgegengesetzten Richtungen, ausgesetzt werden, um diese Wände einer Scherung durch die laminaren Gasströme auszusetzen, die sich beiderseits dieser Wände in entgegengesetzte Richtungen ausbreiten.

2. Verfahren nach Anspruch 1, **dadurch gekennzeichnet, dass** die Wände (7) eine Dicke von weniger als 10 µm, vorzugsweise weniger als 3 µm, vorzugsweise weniger als 300 nm, aufweisen.

3. Verfahren nach einem der vorstehenden Ansprüche, **dadurch gekennzeichnet, dass** der Vorformling (1) durch einen Einlass (21) des Ofens (2) eingebracht wird und die Gasströme (5, 6) entlang der Wände (7) wie folgt entstehen:
- Erzeugen eines sogenannten Auslassgasstroms (5), der sich vom Einlass (21) zum Auslass (3) des Ofens (2) ausbreitet, und
- Erzeugen eines sogenannten Einlassgasstroms (6), der sich vom Auslass (3) zum Einlass (21) des Ofens (2) ausbreitet.

4. Verfahren nach Anspruch 3, **dadurch gekennzeichnet, dass** der Auslassstrom und der Einlassstrom durch Überdruck- und Unterdruckmittel (8) erzeugt werden, die im Vorformling (1) in der Nähe des Einlasses 21 einen Druckunterschied zwischen dem Auslassstrom und dem Einlassstrom von vorzugsweise mindestens 100 Pa, vorzugsweise mindestens 1 kPa, erzeugen.

5. Verfahren nach Anspruch 3 oder 4, **dadurch gekennzeichnet, dass** der Auslassgasstrom und/oder der Einlassgasstrom in verschiedenen, voneinander getrennten Zonen des Arbeitsbereichs erzeugt werden/wird.

6. Verfahren nach einem der vorstehenden Ansprüche, **dadurch gekennzeichnet, dass** die Gasströme durch Mittel erzeugt werden, die sich in der Nähe des Einlasses (21) des Ofens befinden, durch den der Vorformling eingebracht wird.

7. Verfahren nach einem der vorstehenden Ansprüche, **dadurch gekennzeichnet, dass** das Gas der Gasströme Luft und/oder ein neutrales Gas umfasst.

8. Verfahren nach einem der vorstehenden Ansprüche, **dadurch gekennzeichnet, dass** der Vorformling ein Glasvorformling ist.

9. Verfahren nach einem der vorstehenden Ansprüche, **dadurch gekennzeichnet, dass** sich der Arbeitsbereich auf einer Temperatur von über 1000 °C, vorzugsweise über 1500 °C befindet.

## Claims

1. Method for manufacturing an optical fibre, in which:
- a preform (1) is inserted into a furnace (2),
- the preform is drawn via an outlet (3) of the furnace, and
- the preform thus drawn comprising a working zone (4)
the working zone forming an hollow optical fibre of the micro-structured type the working zone being situated outside the furnace, on the side of the outlet (3) of the furnace,
the working zone being at a temperature above a softening or vitreous transition temperature of the material composing the preform
the working zone comprising a structure composed of walls (7), the two opposite faces of these walls being subjected to laminar gas flows (5, 6) following these walls but in opposite directions so as to subject these walls to a shear force of counter-propagating laminar gas flows on either side of these walls.

2. Method according to claim 1, **characterized in that** the walls (7) have a thickness less than 10 µm, preferably less than 3 µm, preferably less than 300 nm.

3. Method according to any one of the preceding claims, **characterized in that** the preform (1) is inserted through an inlet (21) of the furnace (2), the gas flows (5, 6) following the walls (7) being created by:
- creating a gas flow called outlet gas flow (5), propagating from the inlet (21) to the outlet (3) of the furnace (2), and
- creating a gas flow called inlet gas flow (6), propagating from the outlet (3) to the inlet (21) of the furnace (2).

4. Method according to claim 3, **characterized in that** the outlet flow and the inlet flow are created by over-pressure and under-pressure means (8) creating in the preform (1) on the side of the inlet (21) a pressure difference between the outlet flow and the inlet flow, preferably at least 100 Pa, preferably at least 1 kPa.

5. Method according to claim 3 or 4, **characterized in that** the outlet gas flow and/or the inlet gas flow is created in different distinct zones of the working zone.

6. Method according to any one of the preceding claims, **characterized in that** the gas flows are created by means situated on the side of an inlet (21) of the furnace through which the preform is inserted.

7. Method according to any one of the preceding claims, **characterized in that** the gas of the gas flows comprises air and/or an inert gas.

8. Method according to any one of the preceding claims, **characterized in that** the preform is a glass preform.

9. Method according to any one of the preceding claims, **characterized in that** the working zone is at a temperature above 1000°C, preferably above 1500°C.
